**Europäisches Patentamt**

**European Patent Office**

**Office européen des brevets**

(19)

(11) Publication number: **0 137 161**
**B1**

(12)

# EUROPEAN PATENT SPECIFICATION

(45) Date of publication of patent specification: **29.11.89**

(21) Application number: **84108805.7**

(22) Date of filing: **25.07.84**

(51) Int. Cl.⁴: **E 06 B 3/66,** B 32 B 17/00,
G 02 B 1/10

(54) **Non-iridescent infrared-reflecting article for solar energy control.**

(30) Priority: **29.07.83 US 518592**

(43) Date of publication of application:
**17.04.85 Bulletin 85/16**

(45) Publication of the grant of the patent:
**29.11.89 Bulletin 89/48**

(84) Designated Contracting States:
**BE DE FR GB IT NL SE**

(56) References cited:
**WO-A-83/01018**
**US-A-3 677 814**
**US-A-4 206 252**
**US-A-4 308 316**

(73) Proprietor: **PPG INDUSTRIES, INC.**
**One PPG Place**
**Pittsburgh Pennsylvania 15272 (US)**

(72) Inventor: **Michelotti, Joseph Edward**
**P.O. Box 154**
**Church Creek Maryland 21622 (US)**
Inventor: **Henery, Vern Allan**
**3280 Cassius Street**
**Pittsburgh Pennsylvania 15235 (US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2 (DE)**

Courier Press, Leamington Spa, England.

## Description

The present invention relates generally to the art of infrared-reflecting coated glass products, and more particularly to non-iridescent, high transmittance, low emissivity, infrared-reflecting coated glass products.

Transparent infrared-reflecting films such as tin oxide may be deposited on a substrate such as glass by a variety of methods, including the application of thermally decomposable compounds to a heated surface. Useful methods for forming transparent infrared reflecting tin oxide films are taught in US—A—3,107,177 to Saunders et al, US—A—3,677,814 to Gillery, and US—A—4,263,335 to Wagner et al.

Tin oxide films are especially effective infrared reflectors at thicknesses of about 1000 to 8000 Angstroms. However, at such thicknesses the films tend to display interference effects, i.e., multiple visible colors commonly referred to as iridescence. These interference effects render the coated glass aesthetically unacceptable for most architectural applications. Iridescence is not observed in thinner films, however these films have insufficient infrared reflectance to be practically useful. Likewise, iridescence is not observed in thicker films; however, these films tend to be hazy and difficult to make uniformly. Therefore, various methods to mask interference effects have been developed.

US—A—3,710,074 to Stewart discloses an electrically heated multiple glazed window unit having an electroconductive coating on an enclosed surface and a selective reflecting film having an absolute infrared reflectance of at least 0.7 to improve the heat insulating character of the unit and reduce the visible iridescence of the conductive film.

US—A—4,069,630 to Chess et al discloses a heat reflecting multiple glazed window comprising a colored, heat absorbing exterior glass sheet having a heat reflecting tin oxide film on its interior surface, and an interior glass sheet which may be either clear glass or colored. The tin oxide film typically has an interference color from first order red to fourth order red, the visual effect of which is attenuated by the colored heat absorbing glass.

US—A—4,187,336, 4,206,252 and 4,308,316 to Gordon disclose transparent glass window structures comprising a glass sheet bearing a first coating of infrared reflective material, wherein the observance of iridescence resulting from the first coating is reduced by a second coating of particular refractive index and thickness providing at least two interfaces forming means to reflect and refract light to interfere with the observance of iridescence.

WO 83/01018 and US—A—4,308,316 refer to transparent glass window structures bearing a first coating layer of infrared reflective material having a thickness of less than 0.85 µm, wherein the observance of iridescence resulting from the first coating is reduced by a second coating providing at least two interfaces which, with the mass of the second coating, form means to reflect and refract light therefrom, to interference with the observation of iridescence. This method requires exacting control of precise uniform thickness of the coatings.

It is the object of the invention to provide an article for solar energy control having at least two major substantially parallel surfaces, especially a high transmittance, low emissivity multiple glazed window unit which avoids the disadvantages of the known units and which is more effective than the known articles.

The solution to the technological problem is attained by transparent glass sheets for solar energy control having at least two major substantially parallel surfaces wherein on one major surface a transparent infrared reflecting tin oxide coating is disposed at a thickness which exhibits interference effects and a further transparent film is provided having uniform reflectance in the visible wave length range characterized in that,

a) the transparent uniformly reflecting film has a luminous reflectance near 1.0 and being significantly higher than that of the infrared reflecting coating and said film is disposed on another major surface of said glass sheets,

b) the thickness of the tin oxide infrared reflecting film corresponds with a minimum in the luminous reflectance curve.

The present invention uses an alternative method for masking the visible interference effects of an infrared reflecting film in a window unit. The present invention involves masking the visible interference effects of an infrared reflecting film by means of a second film having a uniform reflectance in the visible wavelength range combined with a luminous reflectance which is significantly higher than that of the infrared reflecting film. To produce a high transmittance, low emissivity unit, the thickness of the infrared reflecting film is chosen to correspond with a minimum in the reflectance curve, preferably with the first minimum.

Infrared reflecting films exhibiting visible interference effects may be useful and can be masked on a monolithic sheet. Preferred glass sheets in accordance with the present invention are multiple glazed window units comprising at least two panes, preferably both glass. Conventional glass compositions are useful, especially typical soda-lime-silica glass produced on a float line. Heat absorbing tinted glasses may be employed; but for high transmittance applications, clear glass is preferred.

Tin oxide is used as infrared reflecting film solar energy control in accordance with the present invention. Tin oxide films may be deposited on glass surfaces by a variety of methods such as pyrolytic deposition, powder coating, chemical vapor deposition and cathode sputtering. Preferred methods in accordance with the present invention include pyrolysis of alkyltin fluorides as taught in US—A—3,677,814 to Gillery and 4,263,335 to Wagner et al; chemical vapor deposition as taught in US—A—3,850,679 to Sopko et al; powder coating as taught in US—A—4,325,988 to Wagner and 4,344,986 to Henery; and cathode sputtering as taught in US—A—3,477,936 and 3,506,556 to Gillery et al.

Preferred tin oxide infrared reflecting films in accordance with the present invention have a resistivity less than about 50 ohms per square, more preferably in the range of 20 to 30 ohms per square, and a low emissivity, preferably less than 0.4. The thickness of the film is chosen to correspond with a minimum in the luminous reflectance curve. Preferably, the film thickness corresponds to the first minimum since this point represents the lowest visible reflectance obtainable for a tin oxide film. This point corresponds with the second order blue interference effect at a thickness of about $1.4 \times 10^{-7}$ m (1400 Angstroms). Coating process parameters are adjusted to yield the minimum resistivity for the given thickness to provide maximum infrared reflectance and minimum emissivity. If lower resistivity is desired for higher solar energy performance, a thicker infrared reflecting tin oxide film may be formed, preferably at a thickness near the second minimum in the luminous reflectance curve, most preferably at the thickness corresponding with the third order blue interference effect, about $2.75 \times 10^{-7}$ m (2750 Angstroms).

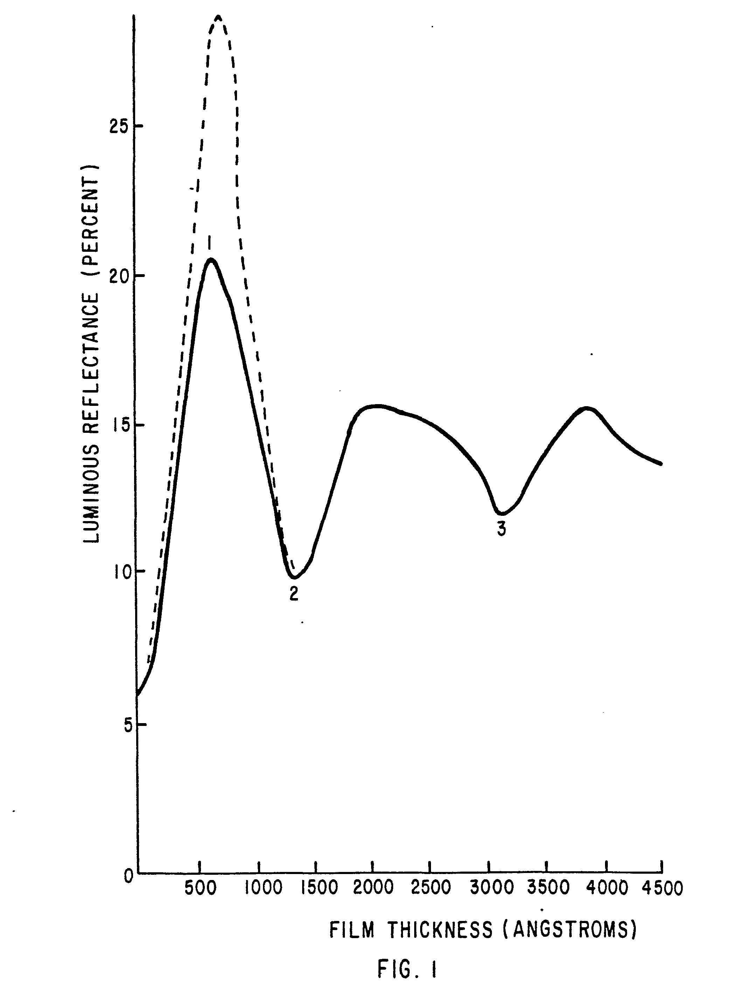

In the preferred embodiment wherein the thickness of the tin oxide infrared reflecting film corresponds with the first minimum in the spectral reflectance curve, the film typically appears blue by interference effects, the visible reflectance is about 10 percent, and the resistivity is generally 45 to 50 ohms per square. In order to mask the visible iridescence of the infrared reflecting tin oxide film, a uniformly and significantly more highly reflecting film is used, preferably with a luminous reflectance greater than 15 percent. The masking film is a colorless film, i.e., one with a relatively flat spectral curve in the range of visible wavelengths and having a reflected luminance near 1.0. The masking film is applied on a substantially parallel surface, but is not in direct contact with the infrared reflecting film. If a thicker infrared reflecting film, e.g., a tin oxide film with a resistivity of 20 to 30 ohms per square and reflectance of about 12 percent which appears reddish blue by interference effects, is desired to lower the emissivity, a more highly reflective masking film may be needed, for example, a film with a luminous reflectance greater than about 25 percent, such as a titanium oxide film with a luminous reflectance as illustrated in Figure 1.

Interference masking films preferred in accordance with the present invention, in addition to being colorless and more visibly reflective than the infrared reflecting film, are also preferably non-absorbing, i.e., having an absorbance less than 25 percent, in order to maintain a high transmittance of visible light. A finished article comprising two sheets of clear glass, a tin oxide infrared reflecting film and a colorless masking film preferably has a visible transmittance of at least about 60 percent, and more preferably about 70 percent for residential use.

Interference masking films effective in accordance with the present invention include tin oxide, nickel oxide, chromium oxide, titanium dioxide, silicon and silicon dioxide. Interference masking films can be produced by any conventional coating technique such as pyrolysis, powder coating, chemical vapor deposition, vacuum coating, and cathode sputtering. A preferred interference masking film is a colorless tin oxide film having a visible reflectance high enough to mask the visible interference effects of the tin oxide infrared reflecting film, generally 17 to 21 percent. The colorless tin oxide masking film may be preferably deposited by the same technique previously described for depositing the tin oxide infrared reflecting film. The thickness of the tin oxide masking film is selected to correspond with a colorless reflectance, that is, a reflected luminance near 1.0, and is selected to correspond with the first maximum in the luminous reflectance curve, typically about 20 percent. At this film thickness, a resistivity greater than 100 ohms per square is typical. The masking film in this case contributes slightly to the solar energy control performance of the unit. Colorless tin oxide is a preferred masking film, therefore, for several reasons. It is durable, contributes to the solar energy performance of the article, and may be deposited from the same materials and by the same techniques as the infrared reflecting tin oxide film.

According to the present invention, an infrared reflecting coating is applied to one surface of a glass sheet and a more visibly reflective masking film is deposited on the opposite surface of the same glass sheet. This coated product may be used monolithically or preferably may be mounted in a multiple glazed unit. In a preferred embodiment of the present invention, however, an infrared reflecting film is applied to one surface of a glass sheet, while a more visibly reflective masking film is applied to one surface of a second glass sheet. The two coated glass sheets are assembled into a multiple glazed window unit, preferably with both coatings facing the interior space in the unit. The preferred orientation for the multiple glazed unit in a building is with the infrared reflective film on the interior glass sheet. In another embodiment of the present invention, both sheets of a double glazed unit are coated on both sides with tin oxide infrared reflecting films on the interior surfaces and colorless tin oxide masking films on the exterior surfaces. The two coatings may be applied simultaneously.

Glass sheets in accordance with the present invention are effective for passive solar heating applications because the high transmittance allows solar energy (light and heat) into a structure, while the high infrared reflectance and low emissivity keep heat inside the structure from being lost.

Figure 1 illustrates the luminous reflectance of a tin oxide film as a function of film thickness. Points 1, 2 and 3 mark the first maximum, first minimum and second minimum respectively. The broken line illustrates the reflectance of a titanium oxide film as a function of film thickness.

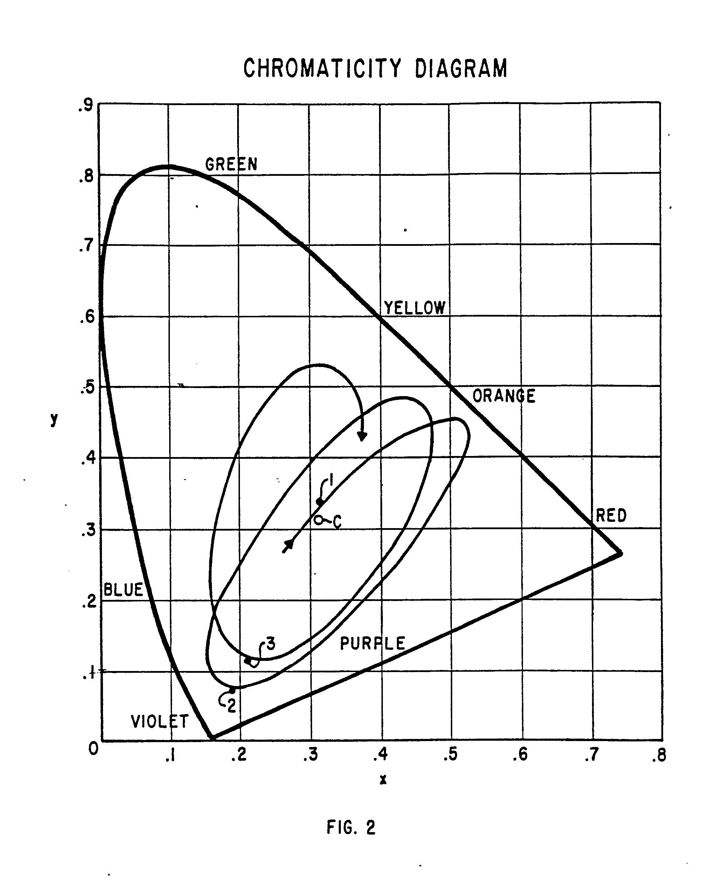

Figure 2 is chromaticity diagram with the x and y chromaticity coordinates measured on the corresponding x and y axes. The observed colors are marked about the periphery. Point C marks the coordinates for illuminant C in accordance with the Commision Internationale de L'Eclairage (CIE). The spiral shaped curve is a plot of the chromaticity coordinates of tin oxide films at increasing film thicknesses. Points 1, 2 and 3 mark the thicknesses corresponding with the reflected luminance maximum and minima shown in Figure 1.

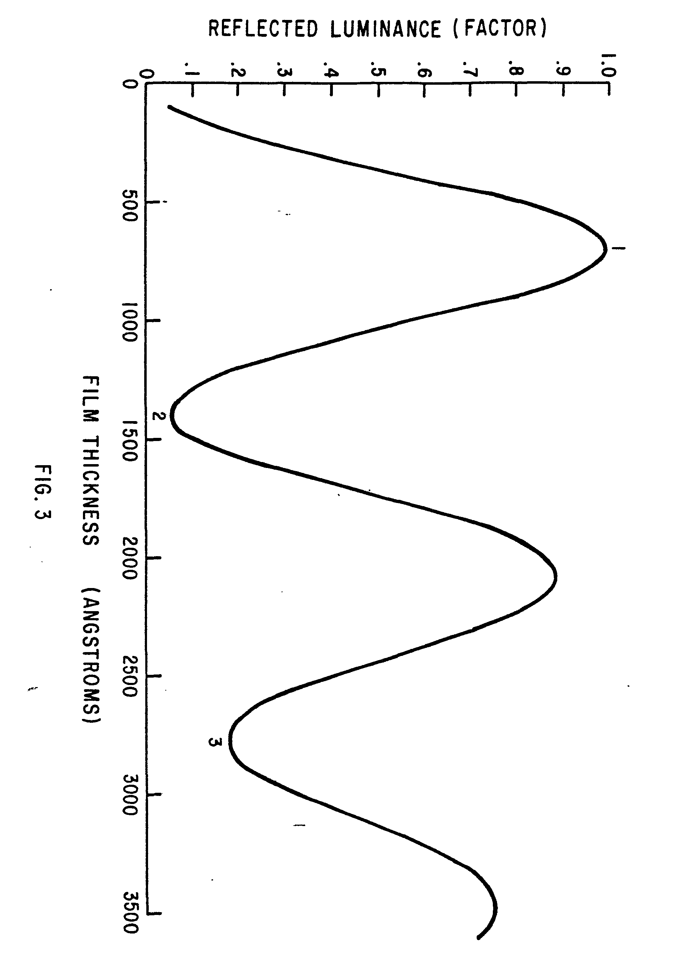

Figure 3 illustrates the reflected luminance of a tin oxide film as a function of the film thickness. Point 1 marks the first maximum of the luminance curve, point 2 the first minimum, and point 3 the second minimum. The luminance factor is the ratio of the luminance of the sample, the tristimulus value Y as defined by the CIE system, to that of a perfect reflecting (or transmitting) primary standard identically illuminated.

The above descriptions illustrate the concept of the present invention, which will be further illustrated in detail by the specific examples which follow.

Example I

A double glazed unit is assembled from two clear float glass sheets. The first sheet is coated on the surface facing the interior of the unit with an iridescent infrared reflecting tin oxide film having a resistivity of 50 ohms per square, emissivity of 0.38, and a luminous reflectance of 9.6 percent. The tin oxide film is deposited by pyrolysis of dibutyltin difluoride in solution which is sprayed onto a hot glass surface. The interference color of the film is blue as indicated by a dominant wavelength of 474 nanometers and an excitation purity of 36.9 percent for light reflected from the coated surface. The second glass sheet is coated on the surface facing the interior of the unit with an interference color masking tin oxide film which has a resistivity of 135 ohms per square and a luminous reflectance of 17.8 percent, and is colorless, characterized by a dominant wavelength of 571 nanometers and an excitation purity of 12.7 percent of light reflected from the coated surface. The masking film is deposited from dibutyltin difluoride powder which is pyrolyzed on contact with a hot glass surface. The assembled unit has a luminous transmittance of 64.7 percent and has masked interference effects, as indicated by exterior surface reflectance of 23.4 and 21.9 percent at dominant wavelengths of 478.8 and 47.9 nanometers and excitation purities of 8.8 and 10.8 percent.

Example II

A double glazed unit is assembled as in Example I. The first clear glass sheet is coated with a tin oxide infrared reflecting film having a resistivity of about 45 to 50 ohms per square, emissivity of 0.37, luminous reflectance of 11.7 percent, and a blue interference color effect indicated by a reflected dominant wavelength of 479.2 and excitation purity of 34 percent. The second clear glass sheet is coated with a tin oxide masking film having a resistivity of 180 to 225 ohms per square, a luminous reflectance of 17.1 percent, and a colorless appearance characterized by a dominant wavelength of 476.4 nanometers and an excitation purity of 2.3 percent. The unit assembled with the coated surfaces facing the interior of the unit has a luminous transmittance of 67.1 percent, and has masked interference effects as indicated by exterior surface reflectances of 23.5 and 23.6 percent with dominant wavelengths of 483 and 484 nanometers and excitation purities of 9.0 and 8.0 percent.

Example III

A single clear glass sheet is coated on one surface with an infrared reflecting tin oxide film having a resistivity of 50 ohms per square which exhibits interference effects, and on the other surface with a colorless, interference color masking tin oxide film. The double coated sheet has a luminous transmittance of 77.2 percent, reflectance from the first coated side of 17.6 percent with a dominant wavelength of 477.2 and excitation purity of 13.9 percent, and reflectance from the second coated side of 18.4 percent with a dominant wavelength of 477.15 and excitation purity of 10.6 percent.

Example IV

A double glazed unit is assembled from two clear glass sheets. Both sheets are coated on the surfaces facing the interior of the unit with an iridescent infrared reflecting tin oxide film having a resistivity of 50 ohms per square, and on the exterior surfaces with a colorless, interference color masking tin oxide film as in the previous examples. The unit has a luminous transmittance of 59.8 percent and has masked interference color effects as indicated by luminous reflectances of 29.6 percent from both exterior surfaces, reflected dominant wavelengths of 482.7 and 483.6 nanometers, and excitation purities of 9.4 and 8.8 percent.

Example V

A double glazed unit is assembled as in Examples I and II from a clear glass sheet with an infrared reflecting tin oxide film having a resistivity of 50 ohms per square, and a second clear glass sheet with a colorless, interference color masking tin oxide film having a resistivity of 110 ohms per square. The unit has a luminous transmittance of 59.8 percent and has masked interference effects as indicated by reflected dominant wavelengths of 482.7 and 483.1 nanometers and excitation purities of 11.9 and 12.3 percent.

Example VI

To lower the emissivity, a glass sheet is coated on one surface with a tin oxide infrared reflective coating having a resistivity of 20 ohms per square, resulting in an emissivity of 0.33. The tin oxide coated surface exhibits strong interference color effects characterized by a third order red/blue color and higher reflectance than the previous examples. The opposite surface of the glass sheet is coated with a highly reflective silicon film. The dual coated glass sheet has a luminous transmittance of 26 percent, reflectance from the silicon coated surface of 49.4 percent with a dominant wavelength of 483.2 nanometers and excitation purity of 6.8 percent, and reflectance from the tin oxide coated surface of 30.0 percent with a dominant wavelength of 551.62 nanometers and excitation purity of 4.4 percent. Because of the high reflectance and absorbance of the silicon masking film, the coated glass is not high in transmittance, but it is low in emissivity, and the interference color effects of the tin oxide infrared reflective film are effectively masked.

Example VII

A dual coated glass sheet as in Example VI is assembled into a double glazed window unit as in previous examples with a clear uncoated glass sheet. The coated sheet is oriented with the tin oxide film facing the interior of the unit and the silicon coating on the exterior surface. The unit has a luminous transmittance of 21 percent, reflectance from the silicon coated exterior surface of 50.5 percent with a dominant wavelength of 483.5 nanometers and excitation purity of 6.2 percent, and reflectance from the uncoated glass exterior surface of 31.5 percent with a dominant wavelength of 525.4 nanometers and excitation purity of 2.6 percent. Because of the high reflectance and absorbance of the silicon masking film, the unit is not high in transmittance, but is low in emissivity, and the interference color effects of the tin oxide infrared reflective film are masked.

Example VIII

A dual coated glass sheet as in Example VI is assembled into a doubled glazed unit as in Example VII except that the coated sheet is oriented with the silicon coating facing the interior of the unit and the tin oxide infrared reflecting film on the exterior surface. The unit has a luminous transmittance of 21 percent, reflectance from the uncoated glass exterior surface of 47.4 percent with a dominant wavelength of 486 nanometers and excitation purity of 7.3 percent, and reflectance from the tin oxide infrared reflecting coated exterior surface of 30.7 percent with a dominant wavelength of 552.4 and an excitation purity of 5.0. Because of the high reflectance and absorbance of the silicon film, the unit is not high in transmittance, but it is low in emissivity, and the interference color effects of the tin oxide infrared reflecting film are masked.

Example IX

A double glazed unit is assembled as in the previous examples. The first clear glass sheet is coated with a tin oxide infrared reflecting film having a resistivity of 25 ohms per square, an emissivity of 0.25 and reflectance from the coated surface of 10.1 percent with a dominant wavelength of 565.4 and an excitation purity of 27.8 percent. The second clear glass sheet is coated with a titanium dioxide film by pyrolysis of a solution of diisopropyl titanium diacetylacetonate. The titanium dioxide coating has a reflectance of 29.6 percent with a dominant wavelength of 479.2 nanometers and an excitation purity of 10.9 percent. The assembled unit, with both coatings on interior surfaces of the unit, has a luminous transmittance of 58.6 percent and has masked interference color effects as characterized by reflectances from the exterior surfaces of 33.7 and 30.5 percent at dominant wavelengths of 471.6 and 470.9 nanometers and excitation purities of 11.3 and 10.7 percent.

The above examples are offered only to illustrate the present invention. The transittance, reflectance and resistance values may be varied by varying the relative coating thicknesses or by controlling coating process parameters in accordance with the various known coating techniques.

**Claims**

1. Transparent glass sheets for solar energy control having at least two major substantially parallel surfaces wherein on one major surface a transparent infrared reflecting tin oxide coating is disposed at a thickness which exhibits interference effects and a further transparent film is provided having uniform reflectance in the visible wave length range, characterized in that,

a) the transparent uniformly reflecting film has a luminous reflectance near 1.0 and being significantly higher than that of the infrared reflecting coating and said film is disposed on another major surface of said glass sheets,

b) the thickness of the tin oxide infrared reflecting film corresponds with a minimum in the luminous reflectance curve.

2. The transparent glass sheets of claim 1, characterized in that, the transparent uniformly reflecting film is selected from tin oxide, titanium oxide, nickel oxide, chromium oxide, silicon or silicon oxide.

3. The transparent glass sheets of claim 1, characterized in that, the luminous reflectance of the infrared reflecting coating is not more than about 10%.

4. The transparent glass sheets of claims 1 to 3, characterized in that, the thickness of the infrared reflecting tin oxide film corresponds with the first minimum in the luminous reflectance curve and the transparent uniformly reflecting film is tin oxide having a thickness corresponding to the first maximum of the luminous reflectance curve.

5. The transparent glass sheets of claims 1—4, characterized in that, two glass sheets are positioned in parallel spaced relation of a multiple glazed window unit and the transparent infrared reflecting tin oxide coating is disposed on one surface of one of said glass sheets, and the transparent uniformly reflecting film is disposed on a parallel surface of one of said glass sheets.

6. The transparent glass sheets of claims 1 and 5, characterized in that, two of such coated glass sheets are assembled with the infrared reflecting coatings facing each other.

**Patentansprüche**

1. Transparente Glasscheiben zur Steuerung der Sonnenenergie mit mindestens zwei, im wesentlichen parallelen Hauptoberflächen, wobei auf einer der Hauptoberflächen eine transparente, Infrarotstrahlung reflektierende Zinnoxidschicht einer solchen Dicke abgeschieden ist, daß sie Interferenzwirkung zeigt, und ein weiterer transparenter Film vorhanden ist, der im sichtbaren Wellenlängenbereich gleichmäßiges Reflexionsvermögen aufweist, dadurch gekennzeichnet, daß

a) der transparente, gleichmäßig reflektierende Film eine Lichtreflexion nahe 1.0 aufweist und wesentlich höher ist als die der Infrarotstrahlung reflektierenden Beschichtung und der Film auf einer anderen Hauptoberfläche der Glasscheiben angeordnet ist,

b) die Dicke des Infrarotstrahlung reflektierenden Zinnoxidfilmes mit einem Minimum in der Lichtreflexionskurve übereinstimmt.

2. Transparente Glasscheiben nach Anspruch 1, dadurch gekennzeichnet, daß der transparente, gleichmäßig reflektierende Film ausgewählt ist aus Zinnoxid, Titanoxid, Nickeloxid, Chromoxid, Silizium oder Siliziumoxid.

3. Transparente Glasscheiben nach Anspruch 1, dadurch gekennzeichnet, daß die Lichtreflexion der Infrarotstrahlung reflektierenden Beschichtung nicht mehr als etwa 10% beträgt.

4. Transparente Glasscheiben nach Ansprüchen 1—3, dadurch gekennzeichnet, daß die Dicke des Infrarotstrahlung reflektierenden Zinnoxidfilms mit dem ersten Minimum in der Lichtreflexionskurve übereinstimmt und der transparente, gleichmäßig reflektierende Film Zinnoxid ist mit einer Dicke, die mit dem ersten Maximum der Lichtreflexionskurve übereinstimmt.

5. Transparente Glasscheiben nach Ansprüchen 1—4, dadurch gekennzeichnet, daß zwei Glasscheiben einer Mehrscheibenfenstereinheit parallel im Abstand voneinander angeordnet sind und die transparente, Infrarotstrahlung reflektierende Zinnoxidschicht auf einer Oberfläche einer der Glasscheiben angeordnet ist und der transparente, gleichmäßig reflektierende Film auf einer parallelen Oberflächen einer der Glasscheiben angeordnet ist.

6. Transparente Glasscheiben nach Ansprüchen 1 und 5, dadurch gekennzeichnet, daß zwei derart beschichteter Glasscheiben so zusammengebaut sind, daß die infrarotstrahlung reflektierenden Beschichtungen einander zugewandt sind.

**Revendications**

1. Feuilles de verre transparentes pour la commande de l'énergie solaire, ayant au moins deux surfaces principales sensiblement parallèles, dans lesquelles, sur l'une des surfaces principales, est déposé un revêtement d'oxyde d'étain transparent, réfléchissant la lumière infrarouge, d'une épaisseur qui présente des effets d'interférence, tandis qu'une autre pellicule est prévue, ayant une réflectance uniforme dans la gamme des longueurs d'ondes visible, caractérisées en ce que

a) la pellicule transparente, uniformément réfléchissante, a une réflectance lumineuse proche de 1,0 et notablement plus élevée que celle du revêtement réfléchissant la lumière infrarouge, et cette pellicule est disposée sur une autre surface principale des feuilles de verre;

b) l'épaisseur de la pellicule d'oxyde d'étain réfléchissant la lumière infrarouge correspond à un minimum de la courbe de réflectance lumineuse.

2. Feuilles de verre transparentes suivant la revendication 1, caractérisées en ce que la pellicule transparente, uniformément réfléchissante, est choisie parmi les pellicules d'oxyde d'étain, d'oxyde de titane, d'oxyde de nickel, d'oxyde de chrome, de silicium ou d'oxyde de silicium.

3. Feuilles de verre transparentes suivant la revendication 1, caractérisées en ce que la réflectance lumineuse de revêtement réfléchissant la lumière infrarouge n'est pas supérieure à environ 10%.

4. Feuilles de verre transparentes suivant les revendications 1 à 3, caractérisées en ce que l'épaisseur de la pellicule d'oxyde d'étain réfléchissant la lumière infrarouge correspond au premier minimum de la courbe de réflectance lumineuse, et en ce que la pellicule transparente, uniformément réfléchissante, est de l'oxyde d'étain ayant une épaisseur correspondant au premier maximum de la courbe de réflectance lumineuse.

5. Feuilles de verre transparentes suivant les revendications 1 à 4, caractérisées en ce que les feuilles de verre sont disposées parallèlement à et à distance d'une unité de fenêtre à vitrages multiples et en ce que la revêtement transparent d'oxyde d'étain réfléchissant la lumière infrarouge est disposé sur l'une des surfaces de l'une des feuilles de verre, et en ce que la pellicule transparente, uniformément réfléchissante, est disposée sur une surface parallèle de l'une des feuilles de verre.

6. Feuilles de verre transparentes suivant les revendications 1 et 5, caractérisées en ce que deux feuilles de verre ainsi revêtues sont assemblées avec les revêtements réfléchissant la lumière infrarouge, se faisant face l'un l'autre.

FILM THICKNESS (ANGSTROMS)

FIG. I

## CHROMATICITY DIAGRAM

FIG. 2

FIG. 3